# EUROPÄISCHE PATENTSCHRIFT

(11) **EP 2 072 343 B1**
(45) Veröffentlichungstag und Bekanntmachung des Hinweises auf die Patenterteilung: **15.02.2012**
(21) Anmeldenummer: 08170678.0
(22) Anmeldetag: 04.12.2008
(51) Int. Cl.: B60R 19/34, B23K 20/12

(54) **Verfahren zur Herstellung eines Stoßfängers und Stoßfänger**
Method for manufacturing a bumper and bumper
Procédé de fabrication d'un pare-chocs et pare-chocs

(30) Priorität: 13.12.2007 DE 102007060113
(43) Veröffentlichungstag der Anmeldung: 24.06.2009
(73) Patentinhaber: Benteler Automobiltechnik GmbH, 33102 Paderborn (DE)
(72) Erfinder: Wibbeke, Michael, 33098, Paderborn (DE); Glodek, Christof, 33098, Paderborn (DE); Handing, Christian, 33449, Langenberg (DE)
(74) Vertreter: Dantz, Jan Henning

(56) Entgegenhaltungen:
- EP-A1- 1 361 082
- JP-A- 2000 301 992
- JP-A- 2000 344 029
- US-A1- 2003 168 494

## Beschreibung

Die vorliegende Erfindung betrifft ein Verfahren zur Herstellung eines Stoßfängers, insbesondere für ein Kraftfahrzeug, der einen Querträger, mindestens eine Crashbox zur Absorption von Aufprallenergie und mindestens eine Flanschplatte zur Montage des Stoßfängers umfasst, nach dem Oberbegriff des Anspruches 1.

Für die Herstellung von Stoßfängern für Fahrzeuge werden derzeit insbesondere Schmelzschweißprozesse eingesetzt, bei denen ein Querträger mit den Crashboxen verschweißt wird. In der EP 1 207 085 ist ein Stoßfänger offenbart, bei dem die Crashboxen an einer Stirnseite mit einer Schweißnaht mit dem Querträger verbunden sind. Beim Verschweißen kann es im Bereich der Fügezone zu einer Zunderbildung kommen, die anschließend einen möglichen Ausgangspunkt für Korrosion bilden können. Zudem besteht beim MIG-Schweißnähten an Aluminiumkomponenten oft ein signifikanter Festigkeitsabfall in der Wärmeeinflusszone, der zu frühzeitiger plastischer Deformation im Abschleppfall führen kann. Bei dem Schweißvorgang besteht zudem das Problem, dass die Schweißgeschwindigkeit beim Schmelzschweißen, insbesondere bei Kombination von Aluminiumbauteilen vergleichsweise gering ist, was zu langen Taktzeiten führt.

Ferner ist es bekannt, metallische Profile über Reibschweißen miteinander zu verbinden. So ist aus der DE 103 06 283 ein Verfahren und eine Vorrichtung zum Reibschweißen bekannt, bei der auf Gehrung geschnittene Profile an ihren Stirnseiten aneinander angelegt werden und dann über die Einleitung von Druck und Schwingungsenergie mittels Reibschweißen verbunden werden. Der so hergestellte Profilrahmen besitzt auch im Bereich der Fügeflächen eine ausreichende Festigkeit, wobei die Profilrahmen beispielsweise für Fenster eingesetzt werden.

Die JP 2000 344029 offenbart einen Stoßfänger, der einen Querträger und eine Crashbox aufweist, die an einer Flanschplatte festgelegt ist. Die Crashbox ist über Reibschweißen mit dem Querträger verbunden.

Es ist Aufgabe der vorliegenden Erfindung ein Verfahren zur Herstellung eines Stoßfängers zu schaffen, dessen Einzelteile effektiv miteinander verbunden werden und dabei eine stabile Verbindung zwischen der Crashbox und dem Querträger und/oder der Flanschplatte bereitgestellt wird.

Diese Aufgabe wird mit einem Verfahren mit den Merkmalen des Anspruches 1 gelöst.

Bei dem Verfahren zur Herstellung eines Stoßfängers wird eine Crashbox zur Absorption von Aufprallenergie in eine erste Haltevorrichtung eingespannt und mit einer Stirnseite an einen in einer zweiten Haltevorrichtung eingespannten Querträger angelegt. Anschließend werden die erste Haltevorrichtung mit der Crashbox und die zweite Haltevorrichtung mit dem Querträger so relativ zueinander bewegt, dass die Crashbox mit dem Querträger über Reibschweißen verbunden wird. Dadurch wird eine stoffschlüssige Verbindung zwischen Querträger und Crashbox bereitgestellt, wobei das Herstellungsverfahren effektiv durchführbar ist. Insbesondere treten auch weniger Probleme bei der Nachbearbeitung wegen Verunreinigungen, beispielsweise durch Schweißspritzer auf. Ferner können auch Werkstoffe und Werkstoffkombinationen verarbeitet werden, die sich mit einem Schmelzschweißverfahren nicht fügen lassen.

Durch das erfindungsgemäße Verfahren können auch innenliegende Stege an der Crashbox mit dem Querträger und/oder der Flanschplatte verschweißt werden, die von außen nicht zugänglich sind. Dabei können beim Verschweißen auch weitere Gegenstände benachbart zu der Crashbox angeordnet sein, da eine Zugänglichkeit zu diesem Bereich, beispielsweise für Schweißbrenner etc. nicht bereitgestellt werden muss.

Gemäß der Erfindung werden an dem Querträger zwei voneinander beabstandete Crashboxen positioniert, die gleichzeitig über Reibschweißen mit dem Querträger verbunden werden. Dies erhöht die Effektivität der Herstellung, wobei die Crashboxen zusammen in eine Haltevorrichtung eingespannt werden können.

Gemäß einer bevorzugten Ausgestaltung der Erfindung ist die Crashbox als Hohlprofil ausgebildet und in einem Innenbereich weist sie mindestens einen Steg auf, der über eine Reibschweißnaht mit dem Querträger und/oder der Flanschplatte verbunden ist. Solche innenliegende Stege können mit herkömmlichen Schmelzschweißverfahren nicht verschweißt werden, da diese von außen nicht zugänglich sind. Mittels dem Reibschweißen können jedoch auch solche Stege die Festigkeit der Verbindung zwischen Crashbox und Querträger erhöhen. Vorzugsweise weist daher die Crashbox mehrere Hohlkammern und Innenstege auf, wobei die gesamte Querschnittsfläche an einer Stirnseite mit dem Querträger verschweißt ist. Dadurch kann jede als Reibschweißnaht ausgebildete Verbindung eine Reibschweißnahtfläche von mehr als 400 mm² aufweisen, vorzugsweise zwischen 500 und 1200 mm².

Die Crashbox ist vorzugsweise aus einem Leichtmetall, insbesondere aus einer Aluminiumlegierung als Strangpressprofil hergestellt. Dies führt zu einem geringen Gewicht, wobei die Crashbox sich auf einfache Weise durch Extrusion und Ablängen herstellen lässt. Der Querträger kann ebenfalls als Strangpressprofil aus einer Aluminiumlegierung oder als Stahlprofil ausgebildet sein. Die Flanschplatte kann als Pressteil oder Strangpressteil aus einer Aluminiumlegierung oder als Pressteil aus Stahl hergestellt sein.

Gemäß einer weiteren Ausgestaltung der Erfindung ist an dem Stoßfänger eine Abschleppöse durch Reibschweißen festgelegt.

Vorzugsweise kann die Flanschplatte an die Außenkontur der Stirnseite der Crashbox angepasst werden da beim orbitalen Reibschweißen geringere seitliche Aufmaße im Vergleich zum Schutzgasschweißen nötig sind. Die Außenkontur der Flanschplatte kann entweder bündig mit der Außenkontur der Crashbox abschließen oder geringfügig mit einem kleinen Rand von beispielsweise weniger als 10 mm hervorstehen. Dies spart Gewicht und Material.

Die Erfindung wird nachfolgend anhand eines Ausführungsbeispieles mit Bezug auf die beigefügten Zeichnungen näher erläutert. Es zeigen:
- Figur 1: eine perspektivische Ansicht eines erfindungsgemäßem Stoßfän- gers;
- Figur 2: eine geschnittene Detailansicht des Stoßfängers der Figur 1;
- Figur 3: eine perspektivische Ansicht einer Crashbox mit Flanschplatte des Stoßfängers der Figur 1;
- Figur 4: eine durch die Crashbox geschnittene perspektivische Detailan- sicht des Stoßfängers der Figur 1;
- Figur 5: eine durch die Crashbox geschnittene perspektivische Ansicht auf die Flanschplatte des Stoßfängers, und
- Figur 6: eine perspektivische schematische Ansicht einer Vorrichtung zur Herstellung eines Stoßfängers.

Ein Stoßfänger 1 umfasst einen Querträger 2 aus einem Metallprofil, der an gegenüberliegenden Seiten jeweils mit einer Crashbox 3 verbunden ist. Die Crashboxen 3 sollen bei einem Aufprall resultierende Prallenergie absorbieren und sich verformen. Die Crashboxen 3 bestehen dabei aus einem extrudierten Profil aus Leichtmetall, insbesondere einer Aluminiumlegierung und sind endseitig an Flanschplatten 4 festgelegt. Die Crashbox 3 kann auch durch ein gerolltes Profil aus Stahl oder durch mehrere Pressteile aus Stahl hergestellt sein.

Der Querträger 2 kann zur Einsparung von Gewicht als Strangpressprofil aus einer Aluminiumlegierung hergestellt sein. Es ist auch möglich, den Querträger als warm- oder kaltgeformtes Pressteil oder Rollformprofil aus Stahl herzustellen. Auch andere Metalllegierungen, z.B. mit Magnesium, können verwendet werden.

Die Flanschplatte 4 kann als Pressteil oder Strangpressprofil aus einer Aluminiumlegierung oder als Pressteil aus Stahl hergestellt sein.

An einer Seite des Querträgers 2 ist eine Abschleppöse 5 festgelegt, die im Bereich einer Stirnfläche einer Crashbox 3 angeordnet ist, so dass eine optimierte Lasteinleitung im Abschleppfall gewährleistet ist.

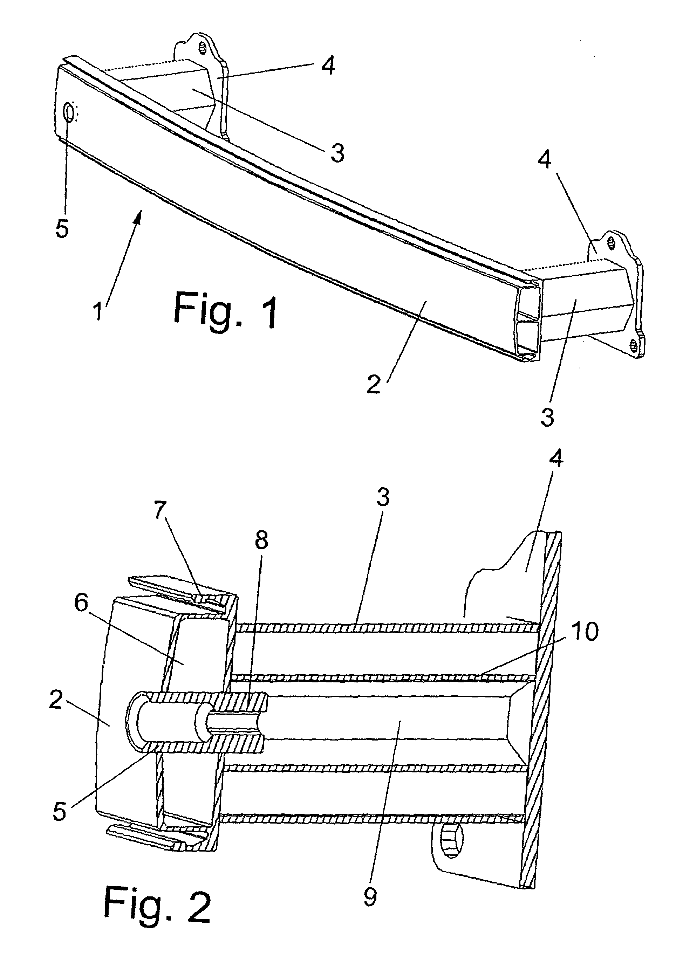

Wie in Figur 2 gezeigt ist, besteht der Querträger 2 aus einem geschlossenen Hohlprofil mit zwei Hohlkammern 6, wobei an gegenüberliegenden Seiten Raststege 7 zur Verbindung mit einer Abdeckung ausgebildet sind. Die Abschleppöse 5 ist zylinderförmig ausgebildet und durchgreift den Querträger 2 und ragt mit einem Abschnitt 8 in eine Hohlkammer 9 der Crashbox 3 hinein. Die Abschleppöse 5 kann über Reibschweißen mit dem Querträger 2 oder einer Crashbox 3 verbunden sein.

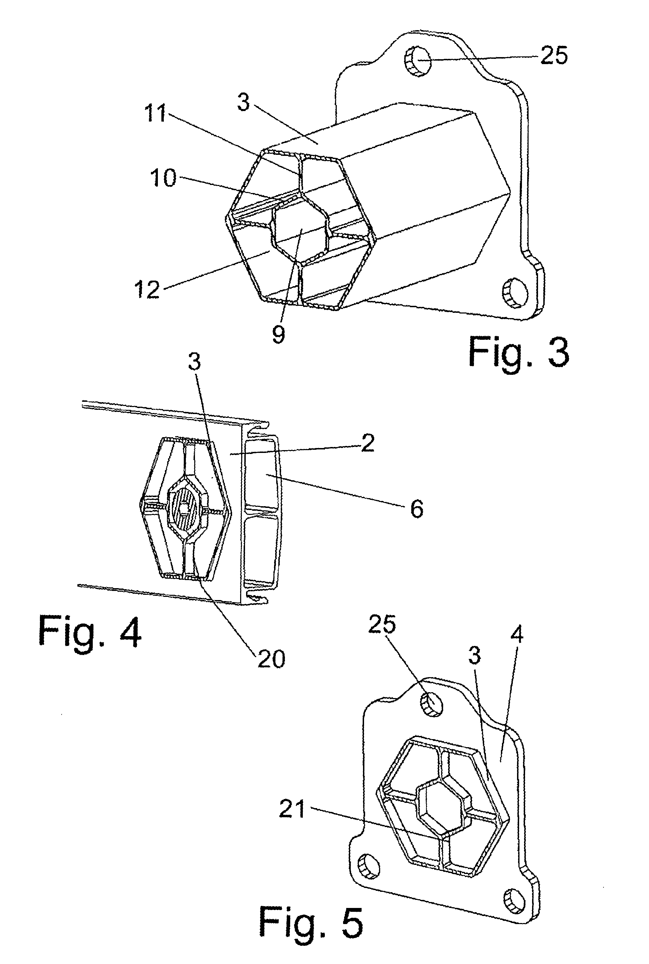

Wie in Figur 3 zu sehen ist, weist die Crashbox 3 eine mittlere Hohlkammer 9 auf, die von einem wabenförmigen inneren Steg 10 umgeben ist. Der Steg 10 ist durch vier radial nach außen verlaufende Stege 11 mit der Außenkontur der Crashbox 3 verbunden. Dadurch sind um die innere Hohlkammer 9 vier äußere Hohlkammern 12 gebildet.

In Figur 4 ist der Querträger 2 auf der zu der Crashbox 3 gewandten Seite gezeigt, wobei eine Reibschweißnaht 20 eingezeichnet ist. Die Reibschweißnaht 20 entspricht der Querschnittskontur der Crashbox 3, da die Reibschweißnaht 20 sowohl mit der geschlossenen Außenkontur der Crashbox 3 als auch mit den inneren Stegen 10 und 11 verbunden ist.

Bei der gezeigten Crashbox 3 ist das extrudierte Aluminiumprofil durch eine Reibschweißnaht 21 mit der Flanschplatte 4 verbunden, wobei die Kontur der Reibschweißnaht 21 der Kontur mit der Reibschweißnaht 20 gleicht.

Die Flanschplatte 4 umfasst mehrere hervorstehende Bereiche, an der Öffnungen 25 für Befestigungsmittel zum fahrzeugseitigen Verbinden des Stoßfängers 1 montiert werden können. Außerhalb dieser hervorstehenden Bereiche für Befestigungsmittel kann die Außenkontur der Flanschplatte 4 entweder bündig mit der Außenkontur der Crashbox 3 abschließen oder geringfügig mit einem kleinen Rand hervorstehen. Denn gegenüber dem thermischen Schweißen ist die Wärmeeinflußzone beim Reibschweißen deutlich kleiner, was eine kompaktere Gestaltung der Flanschplatte 4 ermöglicht.

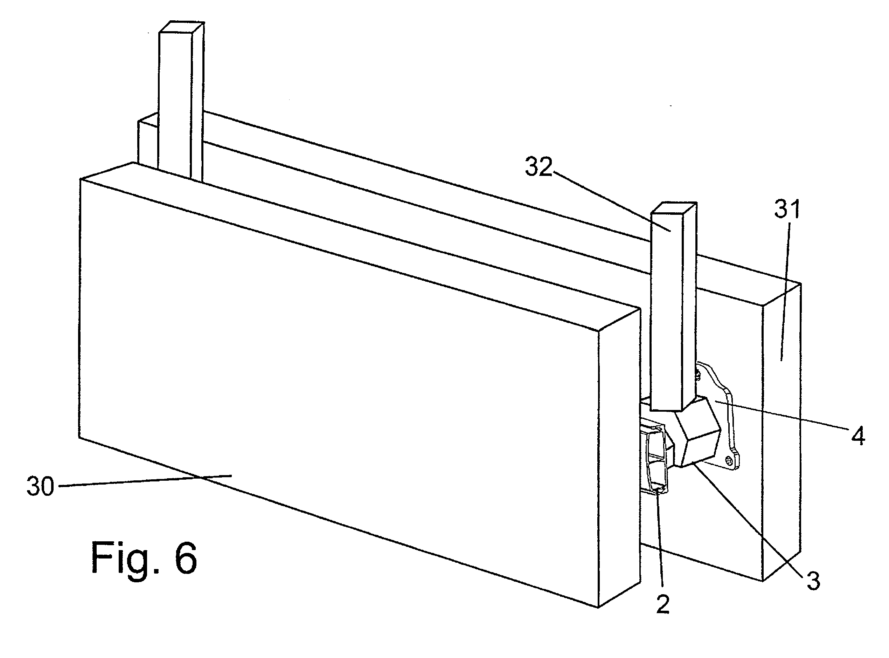

In Figur 6 ist eine Vorrichtung zum Herstellen eines Stoßfängers 1 mittels Reibschweißen schematisch dargestellt. Eine als Haltevorrichtung ausgebildete Spannplatte 30 hält den Querträger 2 und ist benachbart zu einer zweiten Spannplatte 31 angeordnet, an der die beiden Flanschplatten 4 gehalten sind. Die Crashboxen 3 sind dabei über Fixiervorrichtungen 32 gehalten.

Zum Verbinden der Crashboxen 3 mit dem Querträger 2 und den Flanschplatten 4 können wahlweise zunächst die zwei Crashboxen 3 mit den Flanschplatten 4 jeweils über Reibschweißen miteinander verbunden werden. Anschließend oder zuvor werden dann die Crashboxen 3 mit einer Stirnseite an den Querträger 2 angelegt und über Reibschweißen miteinander verbunden.

Je nach Gestaltung der Crashboxen 3, der Flanschplatten 4 und dem Querträger 2 sowie den verwendeten Materialien werden die Haltevorrichtungen 30, 31 und 32 orbital zueinander mit vorbestimmtem Druck bewegt und am Ende in der gewünschten Position angehalten, und die Einzelteile aneinander festzulegen. Durch die Reibungswärme und die überlagerte Druckspannung wird so eine stoffschlüssige Verbindung mit Reibschweißnähten 20 bzw. 21 hergestellt. Bei entsprechender Bewegung und Steuerung der Haltevorrichtungen 30, 31 und 32 können auch die Reibschweißnähte 20 und 21 gleichzeitig oder kurz nacheinander hergestellt werden.

Es ist natürlich auch möglich, nur eine Reibschweißnaht 20 oder 21 vorzusehen und die andere Schweißnaht als Schmelzschweißnaht auszubilden.

## Patentansprüche

1. Verfahren zur Herstellung eines Stoßfängers (1), insbesondere für ein Kraftfahrzeug, der einen Querträger (2), mindestens eine Crashbox (3) zur Absorption von Aufprallenergie und mindestens eine Flanschplatte (4) zur Montage des Stoßfängers (1) umfasst,
wobei die mindestens eine Crashbox (3) in einer ersten Haltevorrichtung (32) eingespannt wird und mit einer Stirnseite an einen in einer zweiten Haltevorrichtung (30) eingespannten Querträger (2) angelegt wird und die erste Haltevorrichtung (32) mit der Crashbox (3) und die zweite Haltevorrichtung (30) mit dem Querträger (2) so relativ zueinander bewegt werden, dass die Crashbox (3) mit dem Querträger (2) über Reibschweißen verbunden werden, und/oder
die mindestens eine Crashbox (3) in einer ersten Haltevorrichtung (32) eingespannt wird und mit einer Stirnseite an eine in einer dritten Haltevorrichtung (31) eingespannte Flanschplatte (4) angelegt wird und die erste Haltevorrichtung (32) mit der Crashbox (3) und die dritte Haltevorrichtung (31) mit der Flanschplatte (4) so relativ zueinander bewegt werden, dass die Crashbox (3) mit der Flanschplatte (4) über Reibschweißen verbunden werden,
**dadurch gekennzeichnet, dass** zwei voneinander beabstandete Crashboxen (3) über die erste Haltevorrichtung (32) an dem Querträger (2) positioniert werden, die anschließend gleichzeitig über Reibschweißen mit dem Querträger (2) verbunden werden.

2. Verfahren nach Anspruch 1, **dadurch gekennzeichnet, dass** die Crashbox (3) als Hohlprofil ausgebildet ist und in einem Innenbereich mindestens einen Steg (10, 11) aufweist, der über eine Reibschweißnaht (20, 21) mit dem Querträger (2) und/oder der Flanschplatte (4) verbunden wird.

3. Verfahren nach Anspruch 2, **dadurch gekennzeichnet, dass** die Crashbox (3) mehrere Hohlkammern (9, 12) und Innenstege (10, 11) aufweist und die gesamte Querschnittsfläche an einer Stirnseite mit dem Querträger (2) und/oder der Flanschplatte (4) verschweißt wird.

4. Verfahren nach einem der Ansprüche 1 bis 3, **dadurch gekennzeichnet, dass** jede als Reibschweißnaht (20, 21) ausgebildete Verbindung der Crashbox (3) mit einer Flanschplatte (4) und/oder dem Querträger (2) eine Reibschweißnahtfläche von mehr als 400 mm² aufweist, vorzugsweise zwischen 500 und 1200 mm²_{.}

5. Verfahren nach einem der Ansprüche 1 bis 4, **dadurch gekennzeichnet, dass** die Crashbox (3) aus einem Leichtmetall, insbesondere aus einer Aluminiumlegierung, als Strangpressprofil hergestellt ist.

6. Verfahren nach einem der Ansprüche 1 bis 5, **dadurch gekennzeichnet, dass** der Querträger (2) als Strangpressprofil aus einer Aluminiumlegierung oder Magnesiumlegierung ausgebildet ist.

7. Verfahren nach einem der Ansprüche 1 bis 6, **dadurch gekennzeichnet, dass** die Flanschplatte (4) als Pressteil oder Strangpressteil aus einer Aluminiumlegierung oder Stahl hergestellt ist.

8. Verfahren nach einem der Ansprüche 1 bis 7, **dadurch gekennzeichnet, dass** an dem Stoßfänger (1) eine Abschleppöse (5) durch Reibschweißen festgelegt wird.

## Claims

1. Method for the production of a bumper (1), in particular for a motorised vehicle, comprising a cross member (2), at least one crashbox (3) for absorbing impact energy and at least one flange plate (4) for mounting the bumper (1),
the minimum of one crashbox (3) being firmly secured in a first holding device (32) with a facing side placed against a cross member (2) firmly secured in a second holding device (30) and the first holding device (32) with the crashbox (3) and the second holding device (30) with the cross member (2) being moved toward each other relatively such that the crashbox (3) and the cross member (2) become connected by means of friction welding, and/or
the minimum of one crashbox (3) being firmly secured in a first holding device (32) with a facing side placed against a flange plate (4) firmly secured in a third holding device (31) and the first holding device (32) with the crashbox (3) and the third holding device (31) with the flange plate (4) being moved toward each other relatively such that the crashbox (3) and the flange plate (4) become connected by means of friction welding,
wherein two crashboxes (3) which spaced apart are positioned on the cross member (2) by means of the first holding device (32) and are ultimately simultaneously connected to the cross member (2) by means of friction welding.

2. Method in accordance with Claim 1, wherein the crashbox (3) is developed as a hollow profile having at least one web (10, 11) in an inner area, which is connected to the cross member (2) and/or the flange plate (4) by means of a friction welding seam (20,21).

3. Method in accordance with Claim 2, wherein the crashbox (3) has a plurality of hollow chambers (9,12) and internal webs (10,11) and the entire cross-sectional area is welded to the cross member (2) and/or the flange plate (4) on one facing side.

4. Method in accordance with any one of Claims 1 to 3, wherein each friction welding seam (20,21) connection of the crashbox (3) to a flange plate (4) and/or cross member (2) has a friction welding seam surface area greater than 400 mm², preferably between 500 and 1200 mm².

5. Method in accordance with any one of the Claims 1 to 4, wherein the crashbox (3) is manufactured as an extruded profile from a light metal, in particular from an aluminium alloy.

6. Method in accordance with any one of Claims 1 to 5, wherein the cross member (2) is developed as an extruded profile made from an aluminium alloy or magnesium alloy.

7. Method in accordance with any one of Claims 1 to 6, wherein the flange plate (4) is developed as a moulded part or extruded part manufactured from an aluminium alloy or steel.

8. Method in accordance with any one of the Claims 1 to 7, wherein a towing lug (5) is mounted on the bumper (1) by means of friction welding.

## Revendications

1. Procédé de fabrication d'un pare-chocs (1), en particulier pour un véhicule automobile, comprenant un support transversal (2), au moins une boîte-tampon (3) destinée à absorber l'énergie d'impact et au moins une plaque à brides (4) destinée au montage du pare-chocs (1),
la ou les boîtes-tampon (3) étant insérées dans un premier dispositif de retenue (32) et appliquées par un côté frontal contre un support transversal (2) inséré dans un second dispositif de retenue (30) et le premier dispositif de retenue (32) doté de la boîte-tampon (3) et le second dispositif de retenue (30) doté du support transversal (2) étant mobiles l'un par rapport à l'autre de sorte que la boîte-tampon (3) est reliée au support transversal (2) par un soudage par friction, et/ou
la ou les boîtes-tampon (3) étant insérées dans un premier dispositif de retenue (32) et appliquées par un côté frontal contre une plaque à brides (4) insérée dans un troisième dispositif de retenue (31) et le premier dispositif de retenue (32) doté de la boîte-tampon (3) et le troisième dispositif de retenue (31) doté de la plaque à brides (4) étant mobiles l'un par rapport à l'autre de sorte que la boîte-tampon (3) est reliée à la plaque à brides (4) par un soudage par friction (4),
**caractérisé en ce que** deux boîtes-tampon (3) distantes l'une de l'autre sont positionnées au-dessus du dispositif de retenue (32) sur le support transversal (2) et sont finalement reliées simultanément au support transversal (2) par un soudage par friction.

2. Procédé selon la revendication 1, **caractérisé en ce que** la boîte-tampon (3) est conçue comme un profilé creux et comprend dans une zone intérieure au moins une nervure (10, 11) reliée par un joint de soudure par friction (20, 21) au support transversal (2) et/ou à la plaque à brides (4).

3. Procédé selon la revendication 2, **caractérisé en ce que** la boîte-tampon (3) comprend plusieurs cavités (9, 12) et nervures intérieures (10, 11) et la superficie de section est entièrement soudée par un côté frontal au support transversal (2) et/ou à la plaque à brides (4).

4. Procédé selon l'une quelconque des revendications 1 à 3, **caractérisé en ce que** chaque liaison de la boîte-tampon (3) à une plaque à brides (4) et/ou au support transversal (2) conçue comme un joint de soudure à friction (20, 21) comprend une surface de joint de soudure à friction supérieure à 400 mm², de préférence comprise entre 500 et 1200 mm².

5. Procédé selon l'une quelconque des revendications 1 à 4, **caractérisé en ce que** la boîte-tampon (3) est composée de métal léger, en particulier d'alliage d'aluminium, comme profilé extrudé.

6. Procédé selon l'une quelconque des revendications 1 à 5, **caractérisé en ce que** le support transversal (2) est conçu comme un profilé extrudé composé d'un alliage d'aluminium ou d'un alliage de magnésium.

7. Procédé selon l'une quelconque des revendications 1 à 6, **caractérisé en ce que** la plaque à brides (4) est fabriquée comme une pièce fabriquée à la presse ou une pièce extrudée composée d'un alliage d'aluminium ou d'acier.

8. Procédé selon l'une quelconque des revendications 1 à 7, **caractérisé en ce qu'**un crochet de remorquage (5) est fixé par soudure à friction au pare-chocs (1).
